# EUROPEAN PATENT APPLICATION

(11) **EP 4 220 456 A1**
(43) Date of publication of application: **02.08.2023**
(21) Application number: 22154211.1
(22) Date of filing: 31.01.2022
(51) Int. Cl.: G06F 21/44, H04L 51/212, H04L 9/40

(54) **AUTHENTICATION**

(71) Applicant: Sage Global Services Limited, Newcastle upon Tyne NE28 9EJ (GB)
(72) Inventor: GREENHUT, Jeffrey Daniel, Newcastle Upon Tyne NE28 9EJ (GB); ANDREW, Michael John, Newcastle Upon Tyne NE28 9EJ (GB); PEASE, Adrian, Newcastle Upon Tyne NE28 9EJ (GB); LATIMER, Christopher Ian, Newcastle Upon Tyne NR NE28 9EJ (GB); GOODWIN, Michael Stuart, Newcastle Upon Tyne NE28 9EJ (GB)
(74) Representative: Definition IP Limited

(57) **Abstract**

A system for authenticating client application instances to use data processing and data communication services provided by a network. the system comprising: a computer system configured to maintain a database comprising a mapping graph data structure defining a plurality of client application instance nodes representative of client application instances communicatively connected to the network and a plurality of identity nodes each associated with an identity of a party, each client application instance node connected to an identity node by an edge, each edge associated with a variable confidence score indicative of a variable degree of confidence that the client application instance associated with the client application instance node is validly associated with the party associated with the identity node.

The system further comprising a computer implemented access function configured to selectively grant each client application instance access to services provided by the network based on the variable confidence score associated with the edge connecting the client application instance node and the identity node associated with the client application instance.

## Description

### Technical Field

The present invention relates to techniques for authenticating network users.

### Background

There is a growing requirement for business software to enable users to exchange business data with other parties without relying on traditional electronic communication techniques, such as email, which are increasingly vulnerable to exploitation by malicious third parties.

To achieve this, in one example, a centrally administered "network" of software-implemented services is established which different client applications, associated with different users, can access.

As well as providing data processing and data storage services, these software services include data communication services enabling different client applications to exchange business data (for example invoice and purchase order data) with each other, and other related data (for example tax data or banking data) with other third parties (for example banking institutions and tax authorities).

To gain access to these services, a client application "subscribes" to the network providing, for example payment details for paying for access to the services and identity details declaring the identity of the party (for example business organisation) associated with the client application subscription. These identity details are necessary to enable business data to be exchanged with other client application instances.

This subscription process is potentially vulnerable to abuse if a malicious party subscribes to the network and claims to be associated with an organisation (for example with a trusted reputation) that they are not. Consequently, this is a requirement to authenticate that a subscribing client application is legitimately associated with the party they purport to be.

Conventionally, such authentication is done manually with the subscribing party required to provide credentials from which it can be inferred that they are legitimately associated with the party that they claim to be.

However, manual processes are time consuming, increasingly impractical in networks with many users and still vulnerable to malicious parties attempting to fake their identities.

### Summary of the Invention

In accordance with a first aspect of the invention, there is provided a system for authenticating client application instances to use data processing and data communication services provided by a network. the system comprising: a computer system configured to maintain a database comprising a mapping graph data structure defining a plurality of client application instance nodes representative of client application instances communicatively connected to the network and a plurality of identity nodes each associated with an identity of a party, each client application instance node connected to an identity node by an edge, each edge associated with a variable confidence score indicative of a variable degree of confidence that the client application instance associated with the client application instance node is validly associated with the party associated with the identity node. The system further comprising a computer implemented access function configured to selectively grant each client application instance access to services provided by the network based on the variable confidence score associated with the edge connecting the client application instance node and the identity node associated with the client application instance.

Optionally, the system further comprises a computer implemented edge validation function configured to receive service usage data associated with the use of the services by the client application instance nodes, said edge validation function configured to dynamically adjust the confidence scores associated with the edges in accordance with the usage data.

Optionally, the edge validation function is configured to increase the confidence score of an edge responsive to the receipt of usage data indicative of legitimate network usage behaviour.

Optionally, the edge validation function is configured to decrease the confidence score of an edge responsive to the receipt of usage data indicative of suspect network usage behaviour.

Optionally, the edge validation function is configured to receive further security data associated with client application instances generated externally from the network, said edge validation function configured to dynamically adjust the confidence scores associated with the edges in accordance with the further security data.

Optionally, the system further comprises a graph management function, said graph management function configured to generate the identity nodes by ingesting identity data records from an external trusted database and generate the identity nodes based on the identity data records.

Optionally, the graph management function is configured to generate the client application instance nodes responsive to a client application instance subscribing to the network, said graph management function configured to generate an edge connecting a client application instance node with an identifier node based on identity declaration data provided by the client application instance.

Optionally, upon connecting a client application instance node with an identifier node, the graph management function is configured to allocate a default minimum confidence score to the edge.

Optionally, the access function is configured to map the confidence score associated with each edge to one of a plurality of permission levels, each permission level associated with one or more predetermined service functions provided by the services and to which access is granted to the corresponding client application instance if the confidence score is mapped to the corresponding permission level.

Optionally, the plurality of permission levels comprises one or more of a basic permission level associated with one or more predetermined service functions providing read and write access to a client application instance's data; a standard permissions level associated with predetermined service functions enabling a client application to receive invitations to establish a relationship for exchanging data with other client application instances, and an enhanced permissions level associated with predetermined service functions enabling a client application to send invitations to establish a relationship for exchanging data with other client application instances.

Optionally, the plurality of permission levels comprises one or more of a minimal permission level associated with one or more predetermined service functions providing read only access to a client application instance's data, and a likely malicious permission level associated with a suspension of access to any service functions.

In accordance with second aspect of the invention, there is provided a method of authenticating client application instances to use data processing and data communication services provided by a network. The method comprising: maintaining a database comprising a mapping graph data structure defining a plurality of client application instance nodes representative of client application instances communicatively connected to the network and a plurality of identity nodes each associated with an identity of a party, each client application instance node connected to an identity node by an edge, each edge associated with a variable confidence score indicative of a variable degree of confidence that the client application instance associated with the client application instance node is validly associated with the party associated with the identity node. The method further comprising selectively granting each client application instance access to services provided by the network based on the variable confidence score associated with the edge connecting the client application instance node and the identity node associated with the client application instance.

Optionally, the method further comprises: receiving service usage data associated with the use of the services by the client application instances, and dynamically adjusting the confidence scores associated with the edges in accordance with the usage data.

Optionally, the method further comprises: increasing the confidence score of an edge connecting a client application instance node and an identifier node associated with a client application instance, responsive to receipt of usage data indicative of legitimate network usage behaviour of the client application instance.

Optionally, the method further comprises: decreasing the confidence score of an edge connecting a client application instance node and an identifier node associated with a client application instance, responsive to receipt of usage data indicative suspect network usage behaviour of the client application instance.

Optionally, the method further comprises: receiving further security data associated with client application instances generated externally from the network, and dynamically adjusting the confidence scores associated with the edges in accordance with the further security data.

Optionally, the method further comprises: generating the identity nodes by ingesting identity data records from an external trusted database, and generating the identity nodes based on the identity data records.

Optionally, the method further comprises: generating the client application instance nodes responsive to a client application instance subscribing to the network, and generating an edge connecting a client application instance node with an identifier node based on identity declaration data provided by the client application instance.

Optionally, the method further comprises: upon connecting a client application instance node with an identifier node, allocating a default minimum confidence score to the edge.

Optionally, the method further comprises: mapping the confidence score to one of a plurality of permission levels, each permission level associated with one or more predetermined service functions provided by the services and to which access is granted if the confidence score is mapped to the corresponding permission level.

Optionally, the plurality of permission levels comprises one or more of a basic permission level associated with one or more predetermined service functions providing read and write access to a client application instance's data; a standard permissions level associated with predetermined service functions enabling a client application to receive invitations to establish a relationship for exchanging data with other client application instances, and an enhanced permissions level associated with predetermined service functions enabling a client application to send invitations to establish a relationship for exchanging data with other client application instances.

Optionally, the plurality of permission levels comprises one or more of a minimal permission level associated with one or more predetermined service functions providing read only access to a client application instance's data, and a likely malicious permission level associated with a suspension of access to any service functions.

In accordance with a third aspect of the invention, there is provided a computer program which when implemented on a suitable computer system, controls the computer system to perform a method in accordance with the second aspect of the invention.

In accordance certain examples of the invention, a technique is provided in which authentication information associated with client application instances seeking to access services provided by a network are represented in a mapping graph stored in a database. Each client application instance is associated with a node that represents the client application instance and a node that represents the party that the client application instance is claimed to be associated with. These nodes are connected by an edge which is associated with a confidence score which is indicative of a degree of certainty that the client application instance in question is legitimately associated with the party.

Advantageously, the confidence score is variable and is used to control which services the client application instance has access to. This means that a client application instance can readily (and rapidly) gain access to certain, low-risk, services when there is low confidence in its authentication but will only gain access to more sensitive services as the degree of confidence in the relationship between the client application instance and the party it is claimed to be associated with increases.

Moreover, because the authentication information is stored in the way it is in a mapping graph, the client application instance and the party with which client application instance is purportedly associated, are represented as three distinct and independent data entities (i.e. the two nodes and the edge connecting them), rather than a single data entity that has a "verified" or "unverified" state associated with it (as is the case with many conventional techniques). This increases the security of the technique because, at a data processing level, there is no inherent or intrinsic connection between the client application instance and the party with which client application instance is purportedly associated other than the connecting edge and associated confidence score.

Further, embodying this relationship as a separate data entity means it can readily represent changes in the degree of confidence of the connection between the client application instance and the party with which client application instance is purportedly associated (by changing the confidence score) or, if the case requires deleted/nullified if the client application instance becomes suspect.

Further, the use of a mapping graph means that connections with other network users (for example other client application instances) can be readily represented.

The authentication can be done entirely automatically as a background process with no manual intervention or special action required by the subscriber. This contrasts, for example, with conventional techniques such as EV (extended validation) SSL (secure sockets layer) based techniques. EV SSL techniques typically require a manual step, such as a validating phone call.

Further, the authentication is based on observation of activities by the client application rather than possession of a password or similar security credential. This means it is less liable to compromise due to a stolen credential.

Various further features and aspects of the invention are defined in the claims.

### Brief Description of the Drawings

Embodiments of the present invention will now be described by way of example only with reference to the accompanying drawings where like parts are provided with corresponding reference numerals and in which:
Figure 1 provides a simplified schematic diagram of a computer system in which relationships between client application instances and parties who use the client application instances are represented by a mapping graph stored in a graph database;
Figure 2 provides a depiction of part of a mapping graph in accordance with certain examples of a message routing technique;
Figure 3 provides a diagram depicting a process in which message data is sent from a message sending client application instance to a message receiving client application instance using a mapping graph;
Figure 4 provides a depiction of part of a mapping graph in which client application instance nodes are allocated a type;
Figure 5 provides a flow diagram showing a process undertaken by a routing function;
Figure 6 provides a simplified schematic diagram depicting components of a computer implemented technique for generating and maintaining confidence scores associated with a relationship between client application instances and parties who use the client application instances;
Figure 7 provides a table showing a mapping between confidence scores and permission levels in accordance with certain examples of a technique Implemented by the components shown in Figure 6;
Figure 8 provides a simplified schematic diagram depicting components of a network for providing services to client application instances, and
Figure 9 provides a simplified schematic diagram depicting an example physical implementation of the computer system shown in Figure 1.

### Detailed Description

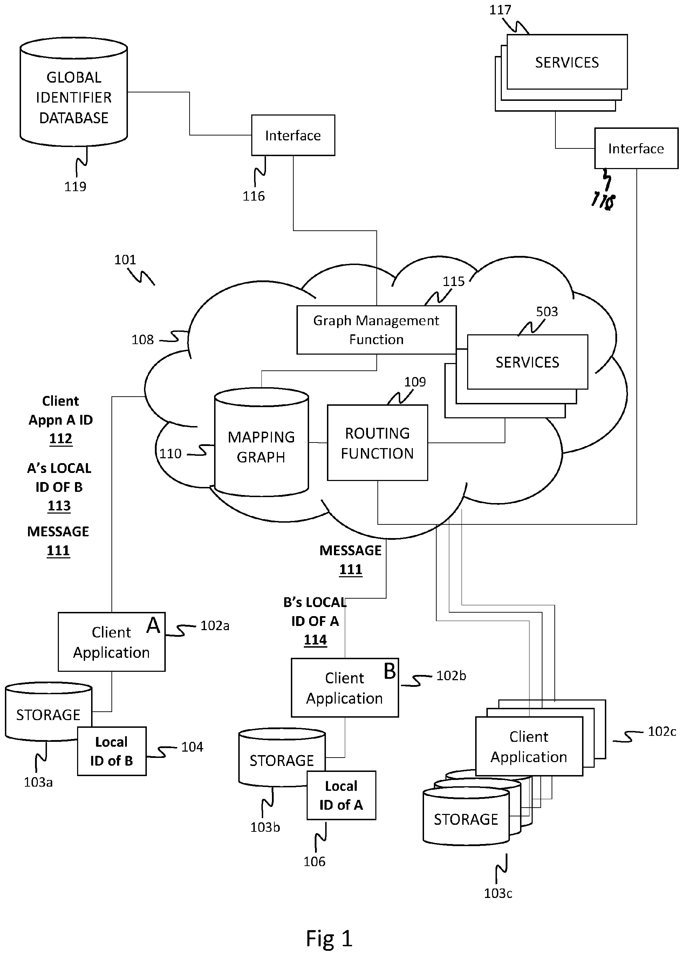

Figure 1 provides a simplified schematic diagram depicting a computer system 101 for providing a plurality of data communication and data processing services to a plurality of users of client applications.

The system comprises a plurality of client application instances 102a, 102b, 102c communicatively connected to a computer network 108. The computer network hosts a plurality of services 503 which provide data storage, data processing and data communication services to the client application instances.

A "client application instance" in the context of examples of the invention is typically a "cloud" based client application or locally installed client application which has been instantiated in response to a subscription being established between a party and a software service provider who provides the services 503.

In one example, the client application instances are accounting software applications for providing data processing and data communication services to users relating to accounting functions. In such examples, the services provided by the services 503 relate to the processing and storage of accounting data and to the communication of accounting data (for example invoices and purchase orders) between the client application instances and between the client application instances and other entities (for example the exchange of data with computer systems provided by tax authorities).

The computer system 101 enables the client application instances to form networks amongst themselves and to securely exchange data with each other. To assist in the explanation of an example of this, Figure 1 shows these plurality of client application instances as a first client application instance 102a, a second client application instance 102b, and a plurality of further client application instances 102c.

Each client application instance is connected to a local data store (typically a suitable database). This is shown in Figure 1 as the first client application instance 102a being connected to a first data store 103a, the second client application instance 102b being connected to a second data store 103b and the plurality of further client application instances 102c each being respectively connected to a plurality of further data stores 103c.

Each client application instance is controlled by a user (or more typically, multiple users) but is associated with a different party. For example, as indicated by the labels "A" and "B" in Figure 1, the first client application instance 102a is associated with a first party A and the second client application instance 102b, is associated with a second party B. Each of the plurality of further client application instances 102c are also associated with a different party.

"Parties" in the context of embodiments of the invention are typically commercial or non-commercial organisations but can be any suitable entity or individual that can be associated with the operation of a client application instance. For example, users of a client application instance may be employees of an organisation with which the client application is associated. The nature of a party will depend on the type and use of the corresponding client application instance.

The data storage connected to each client application instance contains data records comprising identifiers of each of the other parties with whom the party associated with the client application exchanges messages using the services 503. In typical examples, these data records relate to parties with whom the party associated with the client application has established commercial or business relations, such as (but not limited to) suppliers and customers.

For example, if user entity A exchanges messages with user entity B, as can be seen from Figure 1, the first data store 103a, which is connected to the first client application instance 102a and which is associated with user entity A, will comprise a first data record 104 comprising an identifier for user entity B. Similarly, the second data store 103b, which is connected to the second client application instance 102b, and which is associated with user entity B, will comprise a third data record 106 comprising an identifier for party A.

These identifiers are local identifiers. That is, each identifier corresponds to a local representation of the identity of one of the other parties.

This local representation of the identity of each user entity is established and maintained by the client application instance without reference to any other data source external to the client application instance.

For example, the local identifier for user entity B in the first data record 104 and the local identifier for user entity A may not be recognised or comprehensible at any of the other client application instances 102b, 102c.

The local identifiers may take any suitable form. For example, they may comprise text data comprising an abbreviated or informal representation of a name or other identifier associated with the user entity in question.

Additionally, or alternatively, they may comprise other representations such as a reference number, code number or similar.

In certain embodiments, the data records may comprise further information. For example, in certain embodiments, each identifier is associated with relationship data. This relationship data specifies a relationship that a party has with the other party identified by the local identifier.

Typically, the relationship data specifies a relationship that is indicative of the type of messages that will be exchanged between the user entities. For example, the relationship data stored in the first data record 104 may specify that user entity B is a supplier to user entity A. This relationship data thus implies that it would be expected that user entity A would send purchase-order-type messages to user entity B and receive invoice-type messages from user entity B.

To facilitate the communication of messages between the client application instances, the network 108 comprises a routing function 109 connected to a mapping graph 110 stored in a database. Typically, the database is a graph database, but other database types can be used, for example a relational database or a document database.

The mapping graph 110 comprises data defining the relationship between users of the network 108 including the parties associated with the client application instances and other users such as institutions like banks and tax authorities.

With reference to the client application instances in particular, the mapping graph 110 is representative of the identity relationships between the parties associated with the client application instances, the local identifiers held by the client applications instances, and the client application instances themselves. In other words, the mapping graph 110 specifies the identity of the party associated with each client application instance and the identity of the party represented by each local identifier.

This means that it can be used to route a message to the client application of an intended message-receiving party using only a locally defined representation of the message-receiving party and an identity of the sending client app.

The mapping graph 110 comprises a number of nodes which are connected by edges. The mapping graph 110 can be provided in any suitable data format as is known in the art.

As described in more detail below, the mapping graph is typically built up and changes over time as more client application instances join the network 108, local identifiers are established, connections between local identifiers and global identifiers are established, and connections between client applications instances and global identifiers are established.

For client application instances where the relationship with local identifiers and global identifiers is complete the mapping graph is as follows:
The global identity of each party is represented by a global identifier node. Each client application instance is represented by a client application node. Each local identifier is represented by a local identifier node. Each client application node is connected by an edge to the global identifier node of the party with which the client application node is associated. Each local identifier node is connected by an edge to the global identifier of the party to which the global identifier relates. Each local identifier node is connected by an edge to the client application instance node where the local identifier corresponding to the local identifier node is maintained. Each global identifier node is associated with a global identity of a party. The global identity of a party is an identity which is recognised and understood by other parts and users of the system and is typically in the form of a global identifier data record.

Global identifiers are identifiers that enable a party to be identified, preferably uniquely identified, in commercial settings, examples of global identifiers include company registration numbers or other type of organisation numbers (for example registered charity numbers); "DUNS" (Data Universal Numbering System) numbers; "LEI" (Legal Entity Identifier) numbers; VAT numbers. Other examples include officially registered organisation names such as registered company names and registered charity names.

Each client application instance node is associated with one of the client application instances instantiated within the system. Typically, at least some of the client application instances are developed and operated by an operator who provides and controls the network 108. However, other client applications may be developed and operated by other third-party operators who are independent of the operator of the network 108.

This is typically by virtue of a client application instance identifier which is established when a client application instance is instantiated. Each client application node is associated with a corresponding client application instance identifier. Each local identifier node is associated with one of the local identifiers. As described above, these local identifiers are stored in the databases associated with the client application instances.

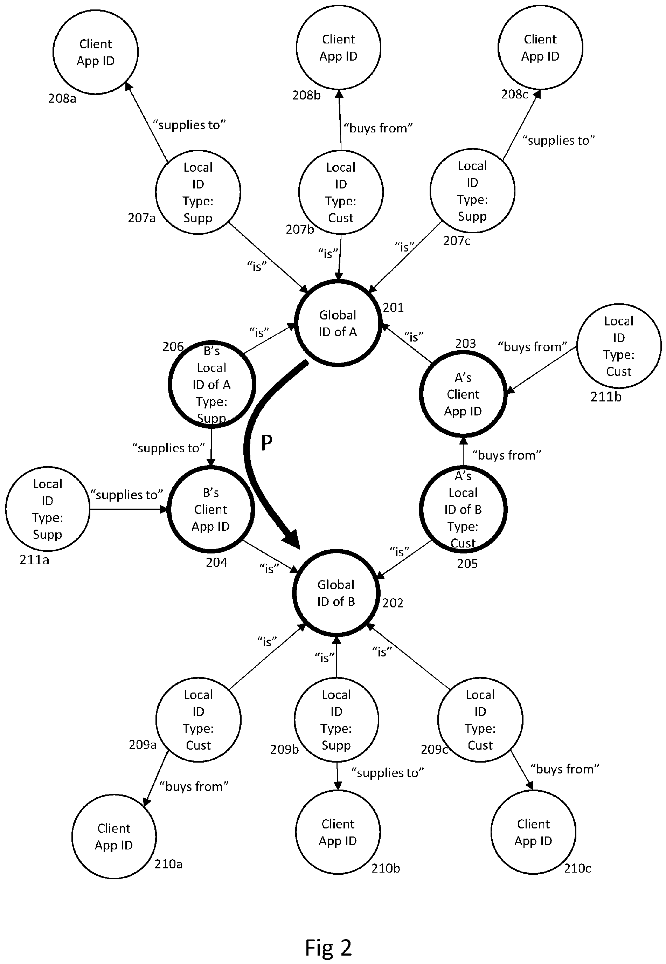

Figure 2 provides a schematic diagram representative of part of a mapping graph corresponding to the system shown in Figure 1.

### Graph Structure

A first global identifier node 201 corresponds to the global identity of user A and a second global identifier node 202 corresponds to the global identity of user B.

A first client application instance node 203 corresponds to the first client application instance 102a associated with user A.

A second client application instance node 204 corresponds to the second client application instance 102b associated with user B.

A first local identifier node 205 corresponds with the local identifier for user B maintained by the first client application instance 102a.

A second local identifier node 206 corresponds with the local identifier for user A maintained by the second client application instance 102b.

The first global identifier node 201 is connected by an edge to the first client application instance node 203 because user A is the party associated with the first client application instance 102a.

The second global identifier node 202 is connected by an edge to the second client application instance node 204 because user B is the party associated with the second client application instance 102b.

First global identifier node 201 is connected by an edge to the second local identifier node 206 because the party that the first global identifier node 201 relates to (user A) is the party identified by the second local identifier node 206.

The second global identifier node 202 is connected by an edge to the first local identifier node 205 because the party that the second global identifier node 202 relates to (user B) is the party identified by the first local identifier node 205.

The first client application instance node 203 is connected by an edge to the first local identifier node 205 because the first client application instance 102a maintains the local identifier for party B to which the first local identifier node 205 relates.

The second client application instance node 204 is connected by an edge to the second local identifier node 206 because the second client application instance 102b maintains the local identifier for party A to which the second local identifier node 206 relates.

The first global identifier node 201 is connected via edges to further local identifier nodes 207a, 207b, 207c each of which relate to local identifiers for user A stored at other client application instances. These other client application instances are represented by further client application nodes 208a, 208b, 208c respectively connected by edges to these further local identifier nodes 207a, 207b, 207c.

Similarly, second global identifier node 202 is connected via edges to further local identifier nodes 209a, 209b, 209c each of which relate to local identifiers for user B stored at other client application instances. These further client application instances are represented by further client application nodes 210a, 210b, 210c connected by edges to these further local identifier nodes 209a, 209b, 209c.

The first client application instance node 203 and second client application instance node 204 are also connected to further local identifier nodes 211a, 211b, relating to local identifiers of other parties with whom the client application in question communicates.

As will be understood, the further local identifier nodes 207a, 207b, 207c, 209a, 209b, 209c, 211a, 211b, will each be connected via an outgoing edge to at least a further global identifier node, however these are omitted for clarity.

Similarly, the further client application instance nodes 208a, 208b, 208c, 210a, 210b, 210c will be connected to further global identifier nodes and potentially further local identifier nodes. These too are omitted for clarity.

### Local Identifier Node and Edge Types

In certain examples, to assist in implementing algorithms for routing messages using the mapping graph, certain nodes can be associated with an entity type. For example, as shown in Figure 2, the local identifier nodes can be associated with either a "Customer" type or a "Supplier" type signifying their commercial relationship with respect to the party associated with the client application instance which maintains the local identifier.

Accordingly, the first local identifier node 205 has a type "Customer" because party A's perspective, party B is a customer. Correspondingly, the second local identifier node 206 has a type "Supplier" from party B's perspective, party A is a supplier.

Further, in certain examples, to assist in implementing algorithms for routing messages using the mapping graph, edges connecting certain nodes can be associated with a relationship type. For example, as seen in Figure 2, edges connecting local identifier nodes to global identifier nodes and client application instance nodes to global identifiers are associated with an "is" relationship type. This signifies that the client application instance represented by the client application instance node, or the local identity associated with the local identifier node is associated with the party associated with the global identifier node.

Similarly, edges connecting local identifier nodes of the type "Customer" with client application nodes are associated with a relationship type "supplies to", and edges connecting local identifier nodes of the type "Supplier" are associated with a relationship type "buys from".

Further, again to assist in implementing algorithms for routing messages using the mapping graph, as is depicted by the arrows on Figure 2, edges that connect the nodes are associated with a direction property. In this way, an edge can be "inward" to a node or "outward" from a node. For example, the edge connecting the second local identifier node 206 with the second client application instance node 204 is "inward" to the second client application instance node 204 and "outward" from the second local identifier node 206.

### Example Process for Routing Messages

To send a message from one of the client application instances to another, the message-sending client application instance communicates the message to the relevant service providing the data communication service. The message-sending client application also includes client application instance ID data which identifies itself and local identifier data which provides the message-sending client application's local identifier of the intended message-receiving party.

The data communication service then forwards the client application instance ID data and the local identifier data to the routing function which performs a routing process whereby the mapping graph is used to identify the client application node of the intended message-receiving party, and, in certain embodiments, the local identifier node associated with the message-receiving party's local identifier for the message sender.

More specifically, by virtue of the structure of the mapping graph described above, the client application instance node associated with the message-receiving party will lie on a path of edges and nodes that connect the global identifier node associated with the global identity of the message-sending party and the global identity of the message-receiving party (this shown as path P in the example depicted in Figure 2). The routing process implements a process that identifies the client application instance node associated with the message-receiving party on this path. As will be understood, the way the routing process traverses the mapping graph to identify the client application instance node associated with the message-receiving party can be implemented in any suitable way. A detailed example is provided below.

After the routing process has been performed, the routing function 109 outputs routing data to the data communication service. The message routing data includes network address data which the data communication service uses to route the message to the client application instance of the message-receiving party. Typically, the message routing data also includes the message-receiving party's local identifier for the message-sending party, enabling the message-receiving party to determine, in terms of its locally defined identifiers, from whom the message has been received.

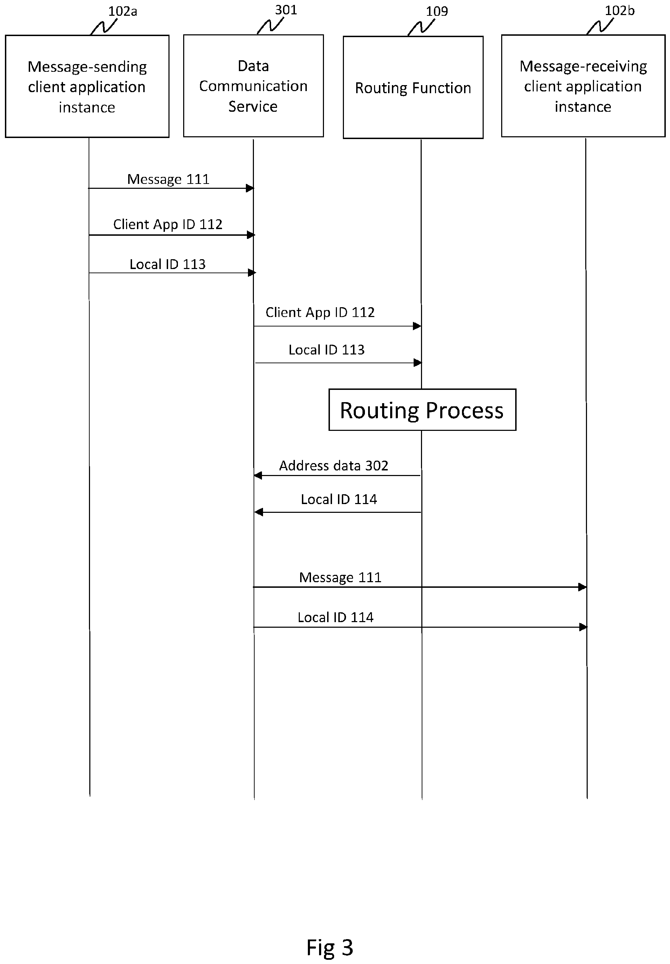

An example of the flow of data associated with such a process is depicted in Figure 3 with reference to a message being sent from the first client application instance 102a to the second client application instance 102b instance.

The first client application instance 102a communicates message data 111; client application instance ID data 112 and local identifier data 113 (corresponding to party A's local identifier for party B) to a data communication service 301 (which is one of the services 503 shown in Figure 1).

The data communication service 301 then forwards the client application instance ID data 112 and local identifier data 113 to the routing function 109 which performs the routing function.

The routing function 109 then communicates network address data 302 of the second client application instance 102b and local identifier data 114 (corresponding to party B's local identifier for party A) to the data communication service 301. The data communication service then uses the network address data 302 to send the message data 111 to the second client application instance 102b (and thus to party B) along with the local identifier data 114 enabling party B to identify party A in terms of party B's local identifier for party A.

An example of the routing process performed by the routing function 109 is now described with reference to a message being sent from the first client application instance 102a to the second client application instance 102b instance.

As shown in Figure 3, the data communication service 301 forwards the client application instance ID data 112 identifying the first client application instance 102a and local identifier data 113 comprising party A's local identifier for party B (corresponding to the first data record 104) to the routing function 109.

Thus, at a first step, the routing function 109 receives as input the client application instance ID data 112 for party A, and the local identifier data 113 for party B, maintained by the first client application instance 102a.

At a second step, the routing function 109 uses this data to identify the first client application instance node 203 and the first local identifier node 205.

At a third step, the routing function 109 then traverses the outward "is" edge from the first client application instance node 203 to identify the first global identifier node 201 associated with party A (the message-sending party).

At a fourth step, the routing function 109 identifies all nodes connected to the first global identifier node 201 via an "is" edge. This identifies the second local identifier node 206 and the further local identifier nodes 207a, 207b, 207c.

At a fifth step, the routing function 109 filters these nodes for nodes with an entity type which is implied by the entity type of the first local identifier node 205.

More specifically, because the first local identifier node 205 has a type "Customer" (because from user A's perspective, user B is a customer) this implies that the type of the second local identifier node 206 will be "Supplier" because from user B's perspective, user A will be a supplier. Accordingly, at the fifth step, routing function 109 filters these nodes for nodes of the type "Supplier". With reference to Figure 2, it can be seen that this will filter out the further local identifier node 207b leaving a group of nodes comprising further local identifier nodes 207a, 207c and second local identifier node 206.

At a sixth step, the routing function 109 identifies all of the client application instance nodes connected to each "Supplier" type local identifier node identified in the fifth step. With reference to Figure 2, it can seen that this will identify the second client application instance node 204 along with further client application instance nodes 208a, 208c.

At a seventh step, the routing function 109 traverses the outbound "is" node from the first local identifier node 205 to identify the second global identifier node 202 associated with party B (the message-receiving party).

At an eighth step, the routing function 109 traverses all of the incoming "is" edges connected to the second global identifier node 202 associated with party B. This group of nodes will contain the second client application instance node 204 and the further local identifier nodes 209a, 209b, 209c.

At a ninth step, the routing function 109, determines the intersection of the group of nodes determined at the sixth step and the group of nodes determined at the eighth step. In other words, at the ninth step, the routing function 109 identifies a common client application instance node between the group of client application instance nodes identified at the fifth step and the group of nodes identified at the eighth step.

This step identifies the client application instance node 204associated with party B (the message-receiving party). In other words, this step identifies the client application instance node associated with the message-receiving party that lies on a path of edges and nodes that connect the global identifier node associated with the global identity of the message-sending party and the global identity associated with the message-receiving party.

At a tenth step, the routing function 109 identifies all the nodes connected to the first global identifier node 201.

At an eleventh step, these nodes are filtered for local identifier nodes of the type "supplier". This group will also include the second local identifier node 206.

At a final step, this group of nodes is filtered for nodes that are connected to the second client application instance node 204 with an edge having a "supply to" property. This identifies the second local identifier node 206.

As will be understood, by implementing these steps, using the mapping graph, and taking as input the local identifier for the intended message-receiving party and an identifier for the sending client application instance, the routing function 109 can identify the message-receiving party's local identifier for the sender and the message-receiving party client application instance.

Example pseudo code for implementing a routing query made by the routing function 109 to the mapping graph example shown in Figure 2is provided below.

In this example pseudo code, for clarity the reference numerals used for the respective nodes are used as the code IDs for the nodes in the pseudo code. For example, the first client application instance node 203 has code ID "203" and so on.

| | |
|---|---|
| RoutingFunction(203, 205) = SenderGlobal = GraphQ | This represents the entire graph - multiple nodes identified |
| .where(id=203) | Finds the party A client application instance node. A single node is identified, i.e. the first client application instance node 203 for party A. "203" is an input to the function. |
| .outward("is") | Traverses any outgoing "is" edge from the first client application instance node 203 and finds the resulting nodes. A single node is identified, i.e. the first global identifier node 201 for party A. |
| Recipient = Graph() | |
| .where(id=SenderGlobal) | Specifies the first global identifier node 201 |
| .inward("is) | Traverses any incoming "is" edges to the first global identifier node 201. Multiple nodes are identified, including the further local identifier nodes 207a, 207b, 207c and the second local identifier node 206 associated with party B |
| .where(type="supplier") | Filters this to only supplier nodes - i.e. Further local identifier nodes 207a, 207c and second local identifier node 206 associated with party B |
| .outward("supplies to") | Traverses outgoing "supplies to" edges from the further local identifier nodes 207a, 207c and second local identifier node 206 associated with party B to find the connected client app nodes. Multiple nodes are identified (one per supplier node above) i.e. the second |
| | client application instance node 204 along with further client application instance nodes 208a, 208c. |
| .intersect( | This will find the intersection of the above set of nodes with the set defined by the rest of the query |
| GraphQ | |
| .where(id=203) | Finds the party A client application instance node. A single node is identified, i.e. the first client application instance node 203 for party A. "203" is an input to the function. |
| .inward("buys from") | Traverses any incoming "buys from" edges to the first client application instance node 203. Multiple nodes are identified, including the first local identifier node 205 associated with party A and further local identifier node 211b |
| .where(id=205) | Filters down to first local identifier node 205 for party B. "205" is an input to the function |
| .outward("is") | Traverse outgoing "is" edges from first local identifier node 205 to find the second global identifier node 202 for party B |
| .inward("is") | Traverse incoming "is" edges to second global identifier node 202 for party B to find all connected nodes. Multiple nodes are identified, including further local identifier nodes 209a, 209b, 209c and the second client application instance node 204 |
| | Completing the intersection gives the second client application instance node 204 |
| SenderLocal = SenderGlobal | |
| .inward("is) | Traverses any incoming "is" edges to the first global identifier node 201. Multiple nodes are identified, including the further local identifier nodes 207a, 207b, 207c and the second local identifier node 206 associated with party B |
| .where(type="supplier") | Filters this to only supplier nodes - i.e. Further local identifier nodes 207a, 207c and second |
| | local identifier node 206 associated with party B |
| .intersect(Recipient.inward("supplies to") | |
| ) | Completing the intersection gives the second local identifier node 206 for party A |
| Return SenderLocal, Recipient | |

In certain examples, the technique for securely communicating messages between users of the network 108 can be facilitated by services situated outside of the network 108. For example, returning to Figure 1, it can be seen that the routing function 109 is connected to a plurality of further external services 117 via an interface 118. These further services are located outside of the network 108.

Providing a message-sending client application instance and message-receiving client application instance are suitably communicatively connected to one of the further external services 117, messages can be securely exchanged in the same way as the message exchange described above with reference to the services 503 located within the network 108.

In certain circumstances, the routing function may be unable to determine a client application instance node associated with the client application instance of the receiving party. In one example, this may be because there is no path that connects the global identifier node of the message-sending party and the global identifier node of the intended message-receiving party via the client application instance node of the receiving party because the party attempting to send the message and the intended message-receiving party have no messaging relationship in the network 108. In another example, the client application node associated with the sending party may not be connected by an edge to a global identifier

In certain circumstances, the routing function 109 may be unable to provide routing data to the data communication service for routing the message to the intended message-receiving party.

This may be due to a number of reasons. In some examples this may be because the sending party is not suitably authorised (examples of this are explained in more detail below). In other examples this may be because in the mapping graph there is no path that connects the global identifier node of the message-sending party and the global identifier node of the message-receiving party via the client application instance node of the message-receiving party (implying that the party attempting to send the message and the intended message-receiving party have no messaging relationship in the network 108). In other examples this may be because the client application instance node of the message-sending party is not yet connected by an edge to a global identifier node (for example, because the message sending client application instance has not yet been associated with a recognised global identifier). In other examples, this may be due to some form of fault with the routing function 109.

In such cases, the routing function 109 is configured to communicate to the data communication service data indicating that routing is not possible. However, in certain examples the routing function 109 is configured to communicate data indicative of alternative message delivery mechanisms to send the data communication service for sending the message data to the message-receiving party, for example email.

For example, the global identifier node associated with certain parties may be associated with alternative message routing data, for example email address data. Accordingly, if the routing function 109 is unable or not authorised to provide the routing data to the data communication service 301 for directly routing the message data to the client application instance of the message-receiving party, the routing function 109 can provide the data communication service 301 with the alternative message routing data for routing the message to the message-receiving party using one or more alternative communication platforms, for example email.

The alternative message routing data can take any appropriate form. For example, an email address for alternative communication via email or, for data communication services that have the facility to create and send postal communications, the alternative message routing data could include postal data, including a postal address.

The message-receiving party may choose to treat a message conveyed using an alternative message delivery mechanism (for example email, post or message sending systems provided by other means, for example third party "elnvoicing" networks such as the PEPOL (Pan-European Public Procurement Online) network) with a lower degree of trust.

In some examples, even if the routing function 109 can successfully identify the relevant routing data to the data communication service, if the routing function 109 identifies alternative message delivery options, the routing function 109 will also send the alternative message routing data to the data communication service as well as the routing data determined using the mapping graph.

In this way, the data communication service is provided with multiple ways to communicate message data to the message-receiving party. Advantageously, this provides a more fault-tolerant message sending system because if the primary mechanism for sending messages is not available due to a fault (e.g., the routing function cannot generate the routing data from the mapping graph due to a fault), then a fall-back message sending mechanism is potentially available to the message-sending party (e.g., email, post or elnvoicing networks such as the PEPOL network.

As described above, in certain examples the local identifier nodes are typed which enables the routing function to perform filtering operations to identify the client application instance node associated with the message-receiving party.

In certain examples, other nodes of the mapping graph are typed. For example, in certain examples further data processed by the system is typed, for example client application instance nodes may be typed and messages may be typed.

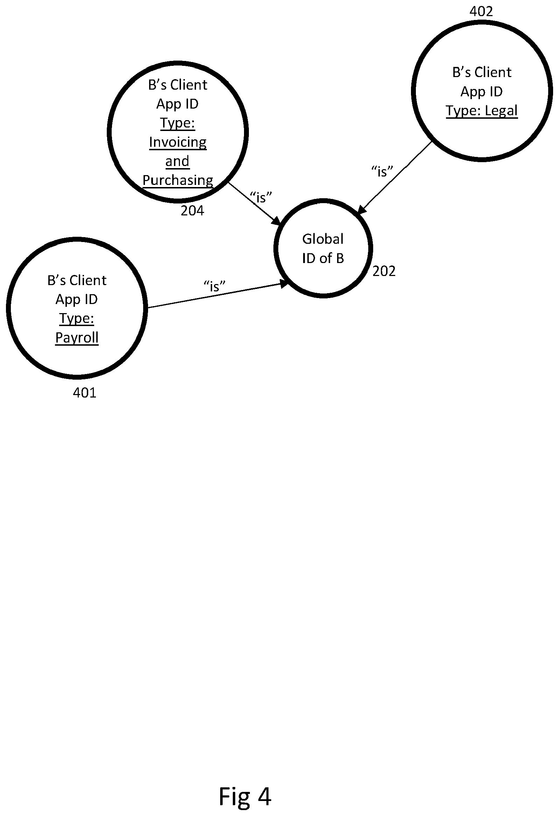

By typing client application instance nodes, multiple different client application instances can be more easily associated with the same party. For example, the same party may have different client applications for handling invoicing and purchasing, payroll, and legal communications. Each of these can be associated with a different client application instance node. An example of this is depicted in Figure 4 which shows the second client application instance node 204 and second global identifier node 202 as shown in Figure 2, but also shows a third client application instance node 401 connected by an "is" edge to the second global identifier node 202 and a fourth client application instance node 402 connected by an "is" edge to the second global identifier node 202.

In this way, as shown in Figure 4, the second client application instance node 204 can be associated with a first type (e.g., invoicing and purchasing), the third client application instance node 401 can be associated with a second type (e.g., payroll) and the fourth client application instance node 402 can be associated with a third type (e.g., legal).

In this way, when passing the client application identifier to the routing function, the data communication service can also pass a message type. The routing function 109 can then be configured to determine from the message type, the type of the relevant client application instance node of the message-receiving party and perform a further filtering step, which filters to client application instance nodes of this type.

For example, if the message is an invoice message, this will have an "invoice and purchasing" type and when identifying the client application instance of the message-receiving party, the routing function 109 will perform a further step that filters out the third client application instance node 401 and the fourth client application instance node 402 thus identifying the second client application instance node 204 as the client application node associated with the client application to which the message should be routed.

Alternatively, for example, if the message is a payroll message, this will have a "payroll" type and when identifying the client application instance of the message-receiving party, the routing function 109 will perform a further step that filters out the second client application instance node 204 and the fourth client application instance node 402 thus identifying the third client application instance node 401 as the client application node associated with the client application to which the message should be routed.

Alternatively, for example, if the message is a legal communication message, this will have a "legal" type and when identifying the client application instance of the message-receiving party, the routing function 109 will perform a further step that filters out the second client application instance node 204 and the third client application instance node 401 thus identifying the fourth client application instance node 402 as the client application node associated with the client application to which the message should be routed.

Use of the mapping graph for message communication as described above has a number of advantages.

In particular, as can be understood from the examples described above, to send and receive messages, there is no requirement for the message-sending party to store information relating to the global identity of the message-receiving party, nor the message-receiving party to store information relating to the global identity of the message-sending party.

Advantageously, this enhances the security of a system comprising multiple user entities exchanging multiple messages because each user entity need only have a trusted relationship with one party, i.e., the routing function via the relevant data communication service.

Moreover, because messages are sent and received only with reference to locally held identifiers, during message sending and receiving, the global identity of the message-sending party/message-receiving party, whilst verified by the mapping graph, remains transparent to the message-sending parties and message-receiving parties themselves.

Further, there is no need for the message-sending party to have any knowledge of the type of client application used by the message-receiving party, nor is there any requirement for the message-sending client application instance to store any information about the type of the message-receiving client application or any other operational parameters associated with the message-sending client application.

Further, because in examples of the present technique, each client application need only store a local identifier for potential message receiving parties and potential message sending parties, it is typically less complicated to integrate the client application instances with data communication services. For example, to integrate with a new data communication service, it would not be necessary to alter the database schema of the client application instance databases.

Returning to Figure 1, as can be seen, the network 108 further comprises a graph management function 115. The graph management function 115 is connected via an interface 116 to a global identifier database 119.

In one example, the global identifier database 119 is a database maintained by a government/state registry of registered companies, for example the UK's Companies House.

Although Figure 1 only shows a single global identifier database 119, in other embodiments, global identifier records may be obtained from multiple sources (e.g., multiple global identifier databases).

The graph management function 115 generates and updates the mapping graph 110. The graph management function 115 generates global identifier nodes based on global identifier data records received from a global identifier database 119. The graph management function 115 may ingest a plurality of these data records at the point of commissioning and periodically re-ingest updates to these global identifier data records.

The graph management function 115 generates client application instance nodes using client application data received from the client instance applications. When a new client application instance initially subscribes to the network, client application identifier data is sent from the client application instance in question to the graph management function 115. The graph management function 115 generates a new client application instance node accordingly.

This client identifier data comprises a self-declaration of the identity of the party associated with (and controlling) the client application instance.

Similarly, when a new client application instance creates a local identifier record relating to another party (for example when a new customer or supplier data record is created), local identifier data is sent from the client application instance in question to the graph management function 115 and the graph management function 115 generates a new local identifier node. Typically, this local identifier data includes entity type data which is indicative of the entity type of the party to which the local identifier record relates (e.g., "customer" or "supplier"). The graph management function 115 uses this entity type data to allocate a corresponding type (e.g., a "customer" type or a "supplier" type).

As discussed above, this local identifier data may also include relationship type data.

The graph management function 115 generates edges connecting the client application nodes to local identifier nodes based on the client application instance that provided the local identifier data.

The graph management function 115 generates edges that connect client application nodes to global identifier nodes based on information provided by the client application instances, typically at the point that the client application subscribes to the network. For example, the graph management function 115 can be configured to match identity data provided when a client application instance subscribes to the network to a global identifier data record ingested from the global identifier database 119. This identity data might typically be part of or all of a company name or company registration number.

In certain embodiments, the graph management function 115 can be configured to communicate potential matching global identifier data records to the client application instance enabling a user of the client application instance to select the correct global identifier data record which identifies the party with whom the client application instance is associated.

Similarly, the graph management function 115 generates edges that connect local identifier nodes to global identifier nodes based on the local identifier information provided by the client application instance.

Again, in certain embodiments the graph management function 115 can be configured to communicate potential matching global identifier data records to the client application instance. This enables a user of the client application instance to select the correct global identifier data record which identifies the party with whom the local identifier node is associated.

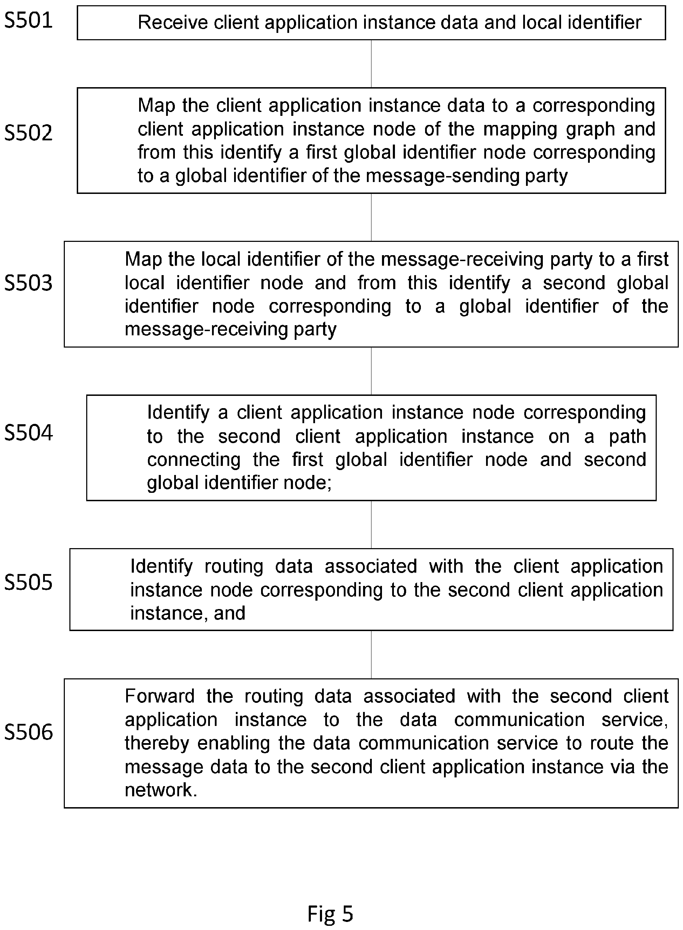

Figure 5 provides a flow diagram depicting a process performed by a routing function in accordance with certain embodiments of the invention

At a first step S501, the routing function receives, from a data communication service, client application instance data identifying a first client application instance associated with a message-sending party and a local identifier of a message-receiving party stored locally at the first client application instance.

At a second step S502, the routing function maps the client application instance data to a corresponding client application instance node of a mapping graph of the type described above and from this identifies a first global identifier node corresponding to a global identifier of the message-sending party.

At a third step S503, the routing function maps the local identifier of the message-receiving party to a first local identifier node and from this identifies a second global identifier node corresponding to a global identifier of the message-receiving party.

At a fourth step S504, the routing function identifies a client application instance node corresponding to the second client application instance on a path connecting the first global identifier node and second global identifier node.

At a fifth step S505, the routing function identifies routing data associated with the client application instance node corresponding to the second client application instance.

At a sixth step, the routing function forwards the routing data associated with the second client application instance to the data communication service, thereby enabling the data communication service to route the message data to the second client application instance via the network.

In accordance with the techniques described above, when a client application instance subscribes to the network 108 it self-declares its global identity.

Thus, at the point of subscription, there is no further authentication of the true identity of the party with whom the client application instance is controlled.

To provide further authentication, in certain examples an edge validation function is provided. The edge validation function 501 is connected to the mapping graph 110 and is configured to associate edges which connect client application instance nodes with global identifier nodes with a confidence score.

The confidence score is generated by the edge validation function. The confidence score is indicative of a systematically inferred level of confidence that the party with whom the global identifier is associated, is truly the same party that is associated with the client application instance. In other words, the confidence score reflects a level of confidence that the party associated with the client application instance hasn't falsely declared that they are a particular party, which they are not.

In typical examples, the confidence score is dynamically generated - meaning it can both increase and decrease.

As described in more detail below, the confidence score generated by the edge validation function can be used to dynamically control the type of access a client application instance gets to the network and in particular the way in which it can interact with other client application instances in the network and other services in the network.

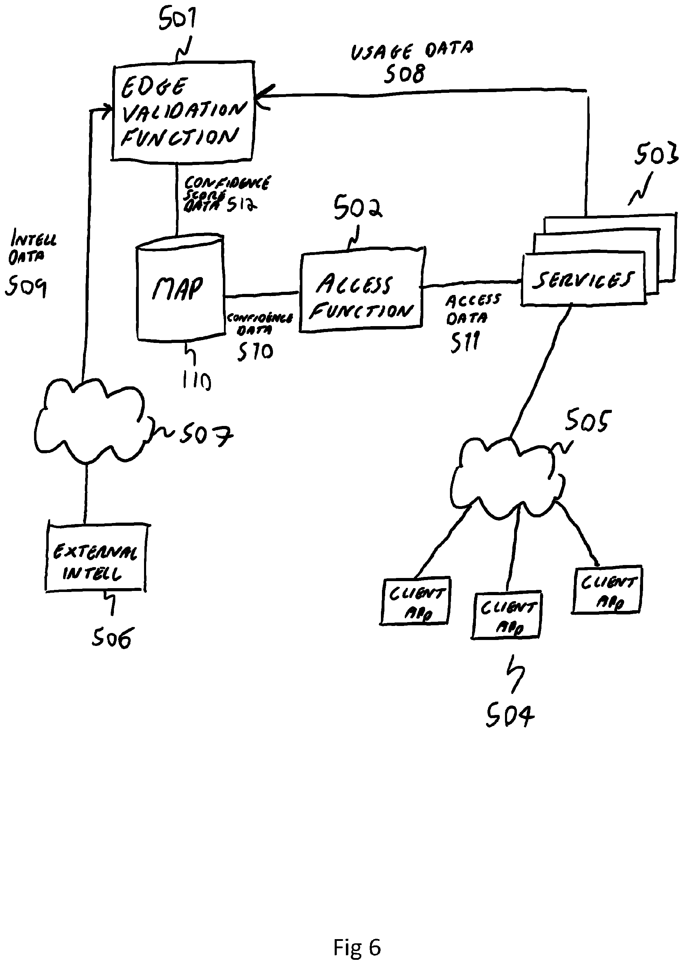

Figure 6 provides a simplified schematic diagram depicting an example implementation of an edge validation function 501 connected to the mapping graph 110.

In the implementation shown in Figure 6, the mapping graph 110 is further communicatively connected to an access function 502 which is communicatively connected to the plurality of services 503 provided by the network 108. These services themselves are communicatively connected to the edge validation function 501.

A plurality of client application instances 504 are communicatively connected to the services 503 via a suitable data network 505. Typically, these client application instances correspond to those shown in Figure 1. As mentioned above, typically, at least some of the client application instances are developed and operated by an operator who provides and controls the network 108. However, other client applications may be developed and operated by other third-party operators who are independent of the operator of the network 108.

The edge validation function 501 is further connected to an external computer system that provides intelligence data. This external computer system 506 is connected to the edge validation function 501 via a suitable data network 507.

In use, the edge validation function 501 receives usage data 508 from the services 503 and external intelligence data 509 from the external computer system 506 and processes this data to generate confidence score data 512 which is then used to update the confidence scores associated with the edges connecting the global identifier nodes and the client application instance nodes stored in the mapping graph 110.

In one example, when one of the client application instances 504 attempts to access one of the services 503, the service in question queries the access function 502.

The access function 502 then obtains confidence data 510 associated with the client application instance in question from the mapping graph 110 and returns access data 511 to the service in question indicating whether or not the confidence data associated with edge connecting the client application instance and the global identifier node is of a sufficient level to authorise access to the service in question.

Typically, the access data 511 is in the form of a permission level. In this way, the types of services that a client application instance can access are determined by the degree of confidence that it is correctly associated with the party associated with the global identifier which was established at the point the client application instance subscribed to the network.

When a client application instance initially subscribes to the network and is associated with a global identifier, the confidence score associated with the edge that connects the client application instance node and global identifier node is set at an initial score.

The usage data 508 relating to a client application's use of the services includes data indicative of the nature of the interactions with other users of the network. For example, this data can be indicative of:
∘ the nature of the interactions
∘ the number of interactions
∘ the identity of the party with whom the interactions occur

The edge validation function 501 will update the confidence scores based on this usage data.

Generally, the edge validation function 501 is configured to increase the confidence score of an edge responsive to the receipt of usage data indicative of legitimate network usage behaviour. Generally, the edge validation function 501 is configured to decrease the confidence score of an edge responsive to the receipt of usage data indicative of suspect network usage behaviour.

For example, a confidence score will be increased as the number of interactions increases over time (in particular, as a history of interactions steadily grows).

Higher weighting is given to interactions with high-value parties who themselves are associated with a high confidence score or whose identities are known with certainty. Such high-value parties may include large established businesses and government bodies such as tax authorities.

Thus, one or more interactions with a party who is associated with a higher confidence score will increase the confidence score of an application instance by a greater amount than one or more interactions with a party who is associated with a lower confidence score.

For example, submitting a return to a tax authority would have a larger impact than making a payment to a low confidence score subscriber. Higher weighting is given to interactions that have a higher value, for example involve the transfer of larger payments or larger supplier orders.

Thus, one or more interactions relating to higher value transactions will increase the confidence score of an application instance more than one or more interaction relating to lower value transactions.

As can be understood, by virtue of this arrangement, the confidence score associated with a client application instance that is legitimately associated with a party will increase over time. For example, the confidence score associated with a client application instance which is involved in a high number of higher value interactions over an extended period of time will be higher than the confidence score associated with a client application instance that is involved in a sporadic number of lower value interactions over a short period of time.

Moreover, this increase will be more rapid the more a client application instance conducts legitimate appearing interactions with other users of the network.

As well as usage data being used to increase the confidence scores, it can also be used to reduce a confidence score.

Specifically, the edge validation function 501 can be configured to identify from the usage data interactions that appear suspicious based for example on their volume, timing, and frequency. For example, long periods of inactivity followed by sporadic short periods of interactions may be considered suspicious.

The edge validation function 501 can be configured to quantify how suspicious the interactions appear to be and reduce the confidence score accordingly.

For example, usage data indicative of unusual but not necessarily malicious behaviour can result in smaller reductions in the confidence scores. On the other hand, usage data highly likely to be indicative of malicious behaviour can result in greater reductions in the confidence score.

The external intelligence data 509 may include data from other sources that can be used to identify potentially malicious parties. This information may include information which can be matched with usage data for example, the domain name used by a client application instance.

For example, the external intelligence data 509 may indicate that a particular domain name is suspected of being associated with fraudulent activity.

In such an example, if the usage data 508 is indicative that a client application instance is sending message from such a domain name, the edge validation function 501 is configured to reduce the associated confidence score accordingly.

Typically, the confidence score is one of a number of discrete scores each of which are associated with a corresponding discrete permission level. The permission level determines the level of access that a client application node gets to the services 503.

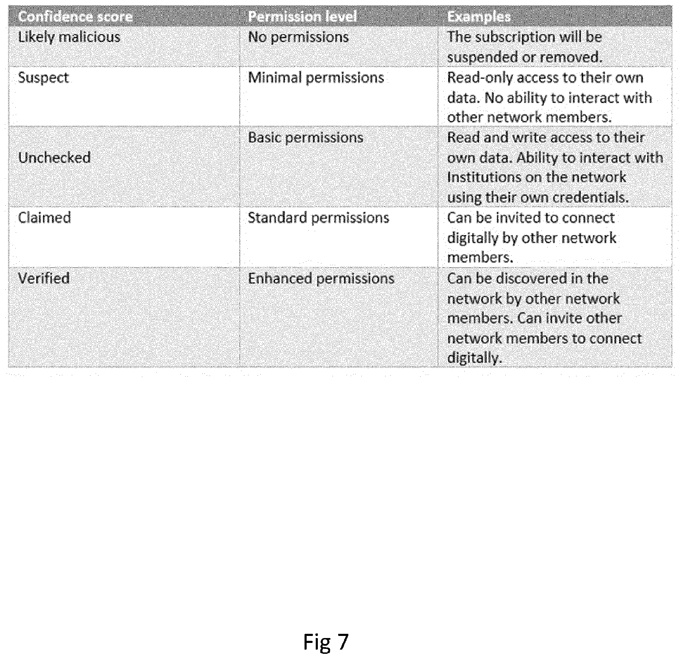

In one example, there are 5 discrete confidence scores and 5 corresponding permission levels which are shown in table in Figure 7.

The lowest confidence score is "likely malicious" which corresponds to a permission level of "no permissions". If the edge connecting a client application instance node and a global identifier node is allocated this confidence score by the edge validation function 501, then the access function 502 will suspend or remove the client application instance subscription.

The next highest confidence score is "suspect" which corresponds to a permission and level of "minimal permissions". If the edge connecting a client application instance node and a global identifier node is allocated this confidence score, then the client application instance may be granted the minimum level of access to the services 503. For example, this minimal access may be read only access to their own data but with no ability to interact with other network members for example sending or receiving messages with other network members.

The next highest confidence score is "unchecked" which corresponds to a permission level of "basic permissions". If the edge connecting a client application instance node and a global identifier node is allocated this confidence score, then the client application instance may be provided with a basic level of access to the client application instances services 503, for example read and write access to their own data and, for example, an ability to interact with other parties on the network, where that interaction is validated by the other party. For example, a party such as a trusted institution like a bank may have independently validated the client application instance and thus communication between the client application instance and such a party may be permitted.

The next highest confidence score is "claimed" which corresponds to a permission level of "standard permissions". If the edge connecting a client application instance node and global identifier node is allocated this confidence score, then the client application instance may be provided with an intermediate level of access to the services 503, for example an ability to be invited to connect digitally by other network members (other client application instances) and to exchange data with these other network members.

The highest confidence score is "verified" which corresponds to a permission level of "enhanced permissions". If the edge connecting a client application instance node and a global identify node is allocated this confidence score, then they are granted the highest level of access to the services 503. They can access the highest level of secure services provided by the network for example they can be discovered in the network by other network members and can invite other network members to connect digitally.

When a client application instance initially subscribes to the network and is associated with a global identifier, the confidence score associated with the edge that connects the client application instance node and global identifier node is set at an initial score.

The edge validation function 501 can use any suitable data processing technique to process the usage data 508 and external intelligence data 509 to update the confidence scores associated with the edges connecting the global identifier nodes and the client application instance nodes.

The techniques includes, but are not limited to one of, or a combination of, simple heuristic-based techniques where different types of usage data and external intelligence data are given numerical weightings which are aggregated to generate a confidence score; statistical techniques, such as Bayesian techniques in which the usage data 508 and external intelligence data 509 are input as parameters to a statistical model, for example a Bayesian model and machine learning based techniques in which the usage data 508 and external intelligence data 509 are input as parameters to a suitably trained machine learning model.

Returning to the examples described with reference to Figures 2 and 5, in certain examples, the routing function 109 is configured to only route message data from a message-sending client application instance to a message-receiving instance if a confidence score associated with the edge connecting the corresponding message-sending client application instance node with the corresponding global identifier node is above a threshold level. For example, above a confidence score that maps to a standard or enhanced permissions score.

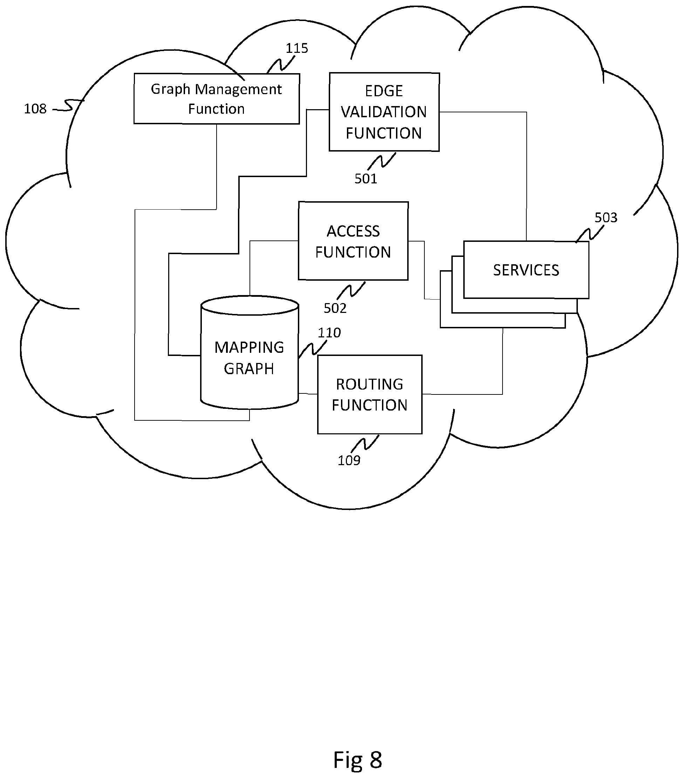

Typically, the edge validation function 501 and the access function 502 are implemented in the network 108 shown in Figure 1. An example of this is depicted in Figure 8.

The components of the computer system 101 and in particular the network 108 can be implemented in any suitable way as will be readily understood by the skilled person.

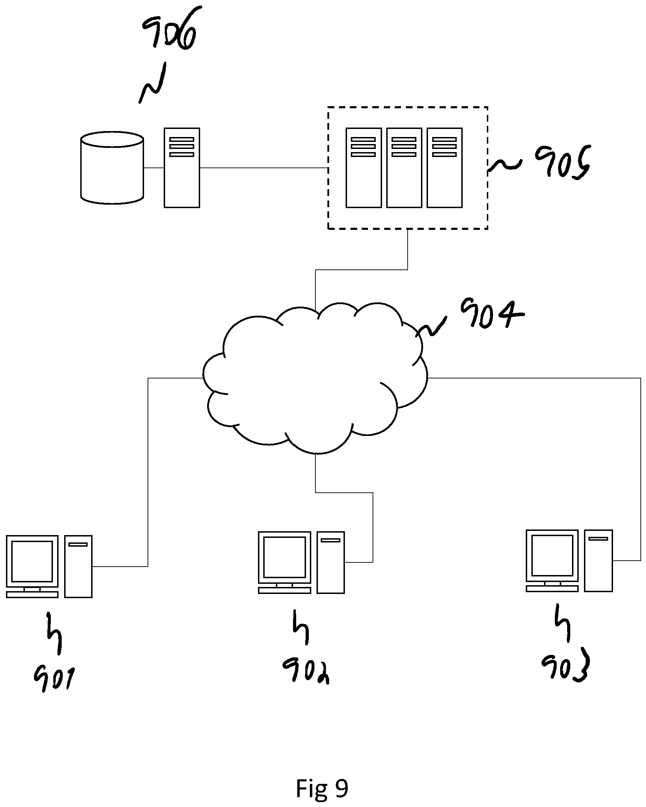

An example of a physical implementation of the computer system 101 and the network 108 is shown in Figure 9.

Each client application instance is run on a computing terminal 901, 902, 903 provided by a suitable computing device such as a network connected personal computer or similar connected computing device such as a tablet or smartphone.

Each computing terminal 901, 902, 903 is connected via a data network 904, typically provided by the combination of telecommunications networks forming the "Internet" to a central computing system 905. The central computing system 905 comprises one or more application servers and associated data storage on which is running one or more software modules providing the components of the network 108 described above including, for example, the routing function 109, the services 503, the edge validation function 501, the access function 502, and the graph management function 115.

The central computing system 905 is connected via a suitable data link to a further computing system 906 on which is running software which implements the graph database and on which the graphing database is stored and maintained.

All of the features disclosed in this specification (including any accompanying claims, abstract and drawings), and/or all of the steps of any method or process so disclosed, may be combined in any combination, except combinations where at least some of such features and/or steps are mutually exclusive. Each feature disclosed in this specification (including any accompanying claims, abstract and drawings) may be replaced by alternative features serving the same, equivalent, or similar purpose, unless expressly stated otherwise. Thus, unless expressly stated otherwise, each feature disclosed is one example only of a generic series of equivalent or similar features. The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations).

It will be appreciated that various embodiments of the present disclosure have been described herein for purposes of illustration, and that various modifications may be made without departing from the scope of the present disclosure. Accordingly, the various embodiments disclosed herein are not intended to be limiting, with the true scope being indicated by the following claims.

## Claims

1. A system for authenticating client application instances to use data processing and data communication services provided by a network, said system comprising:
a computer system configured to maintain a database comprising a mapping graph data structure defining a plurality of client application instance nodes representative of client application instances communicatively connected to the network and a plurality of identity nodes each associated with an identity of a party, each client application instance node connected to an identity node by an edge, each edge associated with a variable confidence score indicative of a variable degree of confidence that the client application instance associated with the client application instance node is validly associated with the party associated with the identity node, and
a computer implemented access function configured to selectively grant each client application instance access to services provided by the network based on the variable confidence score associated with the edge connecting the client application instance node and the identity node associated with the client application instance.

2. A system according to claim 1 further comprising a computer implemented edge validation function configured to receive service usage data associated with the use of the services by the client application instance nodes, said edge validation function configured to dynamically adjust the confidence scores associated with the edges in accordance with the usage data.

3. A system according to claim 2, wherein the edge validation function is configured to increase the confidence score of an edge responsive to the receipt of usage data indicative of legitimate network usage behaviour.

4. A system according to claim 2 or 3, wherein the edge validation function is configured to decrease the confidence score of an edge responsive to the receipt of usage data indicative of suspect network usage behaviour.

5. A system according to any of claims 2 to 4, wherein the edge validation function is configured to receive further security data associated with client application instances generated externally from the network, said edge validation function configured to dynamically adjust the confidence scores associated with the edges in accordance with the further security data.

6. A system according to any previous claim, further comprising a graph management function, said graph management function configured to generate the identity nodes by ingesting identity data records from an external trusted database and generate the identity nodes based on the identity data records.

7. A system according to claim 6, wherein the graph management function is configured to generate the client application instance nodes responsive to a client application instance subscribing to the network, said graph management function configured to generate an edge connecting a client application instance node with an identifier node based on identity declaration data provided by the client application instance.

8. A system according to claim 7, wherein upon connecting a client application instance node with an identifier node, the graph management function is configured to allocate a default minimum confidence score to the edge.

9. A system according to any previous claim, wherein the access function is configured to map the confidence score associated with each edge to one of a plurality of permission levels, each permission level associated with one or more predetermined service functions provided by the services and to which access is granted to the corresponding client application instance if the confidence score is mapped to the corresponding permission level.

10. A system according to claim 9, wherein the plurality of permission levels comprises one or more of a basic permission level associated with one or more predetermined service functions providing read and write access to a client application instance's data; a standard permissions level associated with predetermined service functions enabling a client application to receive invitations to establish a relationship for exchanging data with other client application instances, and an enhanced permissions level associated with predetermined service functions enabling a client application to send invitations to establish a relationship for exchanging data with other client application instances.

11. A system according to claim 10, wherein the plurality of permission levels comprises one or more of a minimal permission level associated with one or more predetermined service functions providing read only access to a client application instance's data, and a likely malicious permission level associated with a suspension of access to any service functions.

12. A method of authenticating client application instances to use data processing and data communication services provided by a network, said method comprising:
maintaining a database comprising a mapping graph data structure defining a plurality of client application instance nodes representative of client application instances communicatively connected to the network and a plurality of identity nodes each associated with an identity of a party, each client application instance node connected to an identity node by an edge, each edge associated with a variable confidence score indicative of a variable degree of confidence that the client application instance associated with the client application instance node is validly associated with the party associated with the identity node, and
selectively granting each client application instance access to services provided by the network based on the variable confidence score associated with the edge connecting the client application instance node and the identity node associated with the client application instance.

13. A method according to claim 12, further comprising:
receiving service usage data associated with the use of the services by the client application instances, and
dynamically adjusting the confidence scores associated with the edges in accordance with the usage data.

14. A method according to claim 13, further comprising:
increasing the confidence score of an edge connecting a client application instance node and an identifier node associated with a client application instance, responsive to receipt of usage data indicative of legitimate network usage behaviour of the client application instance.

15. A method according to claim 13 or 14, further comprising:
decreasing the confidence score of an edge connecting a client application instance node and an identifier node associated with a client application instance, responsive to receipt of usage data indicative suspect network usage behaviour of the client application instance.

16. A method according to any of claims 12 to 15, further comprising:
receiving further security data associated with client application instances generated externally from the network, and
dynamically adjusting the confidence scores associated with the edges in accordance with the further security data.

17. A method according to any of claims 12 to 16, further comprising:
generating the identity nodes by ingesting identity data records from an external trusted database, and
generating the identity nodes based on the identity data records.

18. A method according to claim 17, comprising:
generating the client application instance nodes responsive to a client application instance subscribing to the network, and
generating an edge connecting a client application instance node with an identifier node based on identity declaration data provided by the client application instance.

19. A method according to claim 18, comprising:
upon connecting a client application instance node with an identifier node, allocating a default minimum confidence score to the edge.

20. A method according to any of claims 12 to 19, further comprising:
mapping the confidence score to one of a plurality of permission levels, each permission level associated with one or more predetermined service functions provided by the services and to which access is granted if the confidence score is mapped to the corresponding permission level.

21. A method according to claim 20, wherein the plurality of permission levels comprises one or more of a basic permission level associated with one or more predetermined service functions providing read and write access to a client application instance's data; a standard permissions level associated with predetermined service functions enabling a client application to receive invitations to establish a relationship for exchanging data with other client application instances, and an enhanced permissions level associated with predetermined service functions enabling a client application to send invitations to establish a relationship for exchanging data with other client application instances.

22. A method according to claim 21, wherein the plurality of permission levels comprises one or more of a minimal permission level associated with one or more predetermined service functions providing read only access to a client application instance's data, and a likely malicious permission level associated with a suspension of access to any service functions.

23. A computer program which when implemented on a suitable computer system, controls the computer system to perform a method according to any of claims 12 to 22.
